(19) Europäisches Patentamt
European Patent Office
Office européen des brevets

(11) **EP 3 424 997 A1**

(12) **EUROPEAN PATENT APPLICATION**
published in accordance with Art. 153(4) EPC

(43) Date of publication:
**09.01.2019 Bulletin 2019/02**

(51) Int Cl.:
*C08L 9/00* [(2006.01)]    *B32B 7/12* [(2006.01)]
*B32B 25/04* [(2006.01)]    *B65G 15/32* [(2006.01)]
*C08K 3/04* [(2006.01)]    *C08K 3/26* [(2006.01)]
*C08K 3/36* [(2006.01)]    *F16G 1/08* [(2006.01)]

(21) Application number: **17760107.7**

(22) Date of filing: **01.03.2017**

(86) International application number:
**PCT/JP2017/008197**

(87) International publication number:
**WO 2017/150643 (08.09.2017 Gazette 2017/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.03.2016 JP 2016041871**

(71) Applicant: **Bridgestone Corporation
Tokyo 104-8340 (JP)**

(72) Inventors:
• **TAKANO Genho
Tokyo 104-8340 (JP)**
• **AKAMA Shuyo
Tokyo 104-8340 (JP)**
• **TSUNENISHI Youhei
Tokyo 104-8340 (JP)**

(74) Representative: **Lang, Johannes
Bardehle Pagenberg Partnerschaft mbB
Patentanwälte, Rechtsanwälte
Prinzregentenplatz 7
81675 München (DE)**

(54) **RUBBER COMPOSITION, LAMINATE BODY, AND CONVEYER BELT**

(57) Provided is a rubber composition capable of suppressing deterioration of adhesiveness to a reinforcing member even in the case of having been subjected to repeated flex fatigue. The rubber composition is obtainable by compounding a rubber component containing a diene based rubber, a wet silica, a carbon black, and a calcium carbonate, wherein: a compounding amount of the wet silica is 3 parts by mass or more per 100 parts by mass of the diene based rubber; a nitrogen adsorption BET specific surface area of the carbon black is 8 $m^2$/g or more and 100 $m^2$/g or less; and the following formula $0.5X+28 \leq Y \leq X+88$ is satisfied, where X represents the nitrogen adsorption BET specific surface area of the carbon black in terms of $m^2$/g, and Y represents a compounding amount of the calcium carbonate in terms of parts by mass per 100 parts by mass of the diene based rubber.

FIG. 1

EP 3 424 997 A1

**Description**

TECHNICAL FIELD

This disclosure relates to a rubber composition, a laminated body, and a conveyor belt.

BACKGROUND

For the purpose of reinforcing a rubber member to improve strength thereof, reinforcing members, including an organic fiber such as polyethylene terephthalate and nylon, which is untreated or dipped with an adhesive component such as resorcin-formaldehyde-latex (RFL), etc. on its surface, and/or an inorganic fiber such as steel cord, and the like, are used for rubber products required to have strength, such as tires for automobiles, conveyor belts, and hoses.
In manufacture of such rubber product, such reinforcing member and rubber member and/or such reinforcing members themselves are occasionally adhered to one another through an adhesive containing a rubber composition. For example, conveyor belts are frequently used as item transportation means in various industrial fields, and thus are required to have high durability capable of withstanding friction and impact from transported items. Therefore, they are ordinarily manufactured by: preparing one or more layers of reinforcing member, and cover rubbers as rubber members; laminating them via an adhesive containing a rubber composition such that the cover rubbers become the upper and lower outermost layers; and then performing vulcanization adhesion. In such situation, in order to obtain high reinforcing effect, desired is a rubber composition capable of exhibiting high adhesiveness between reinforcing members and high adhesiveness between a rubber member and a reinforcing member.
For example, in use of a conveyor belt, there are cases that after manufacture of one layered belt including a layer containing a rubber composition and a reinforcing member layer, a processing (so-called endless processing) is performed to peel off a part of the layers at both ends thereof, and to adhere the ends to each other with an endless adhesive and/or an endless adhesive rubber, etc. The adhered both ends (endless portion) are required to have high durability in actual use, and it is particularly important that the members in the endless portion, particularly the reinforcing members, are firmly adhered.
Here, from a viewpoint of adhesiveness between a rubber member using a rubber composition and a reinforcing member, for example, JPH06-306211A (PTL1) discloses that a rubber manufacturable from a rubber composition containing 0.5 parts to 10 parts by mass of N,N'-m-phenylene bismaleimide, 0.3 parts to 3 parts by mass of a carboxylic acid which is divalent or more or an anhydride thereof, and 0.3 to 10 parts by mass of a compound that generates formaldehyde when heated, per 100 parts by mass of a rubber such as natural rubber and styrene butadiene rubber, has excellent vulcanization adhesion performance to a reinforcing member.

CITATION LIST

Patent Literature

PTL1: JPH06-306211A

SUMMARY

(Technical Problem)

However, a conveyor belt for example is subjected to repeated flex fatigue during use due to a pulley portion and the like. Our study has discovered that adhesiveness to a reinforcing member of the aforementioned conventional rubber composition may deteriorate under repeated flex fatigue. Therefore, when used continuously, a rubber product such as a conveyor belt, which is manufactured by using the aforementioned conventional rubber composition as an adhesive, has a risk of weakened adhesion between members and deteriorated durability. Thus, such rubber composition has a room for improvement.
It would thus be helpful to provide a rubber composition capable of suppressing deterioration of adhesiveness to a reinforcing member even in the case of having been subjected to repeated flex fatigue. It would also be helpful to provide a laminated body using the aforementioned rubber composition, which is capable of suppressing deterioration of durability that occurs over time in a rubber product such as a conveyor belt, and a conveyor belt using the aforementioned laminated body, which is capable of suppressing deterioration of durability that occurs over time.

(Solution to Problem)

As a result of inventive study for the aforementioned purpose, we have discovered that a specific compound may be compounded to a rubber component containing a diene based rubber such that specific conditions are satisfied, to thereby maintain high adhesiveness to a reinforcing member even in the case of having been subjected to repeated flex fatigue.

The disclosed rubber composition is:
a rubber composition obtainable by compounding a rubber component containing a diene based rubber, a wet silica, a carbon black, and a calcium carbonate, wherein:

a compounding amount of the wet silica is 3 parts by mass or more per 100 parts by mass of the diene based rubber; a nitrogen adsorption BET specific surface area of the carbon black is 8 m$^2$/g or more and 100 m$^2$/g or less; and the following formula (1) is satisfied:

$$0.5X+28 \leq Y \leq X+88 \ \dots \ (1)$$

where X represents the nitrogen adsorption BET specific surface area of the carbon black in terms of m$^2$/g, and Y represents a compounding amount of the calcium carbonate in terms of parts by mass per 100 parts by mass of the diene based rubber.

The disclosed laminated body is obtainable by laminating and adhering a layer containing the disclosed rubber composition and a reinforcing member layer.

The disclosed conveyor belt contains the disclosed laminated body.

(Advantageous Effect)

According to this disclosure, it is possible to provide a rubber composition capable of suppressing deterioration of adhesiveness to a reinforcing member even in the case of having been subjected to repeated flex fatigue. According to this disclosure, it is also possible to provide a laminated body using the aforementioned rubber composition, which is capable of suppressing deterioration of durability of a rubber product such as a conveyor belt that occurs over time, and a conveyor belt using the aforementioned laminated body, which is capable of suppressing deterioration of durability that otherwise occur over time.

BRIEF DESCRIPTION OF THE DRAWINGS

In the accompanying drawing:

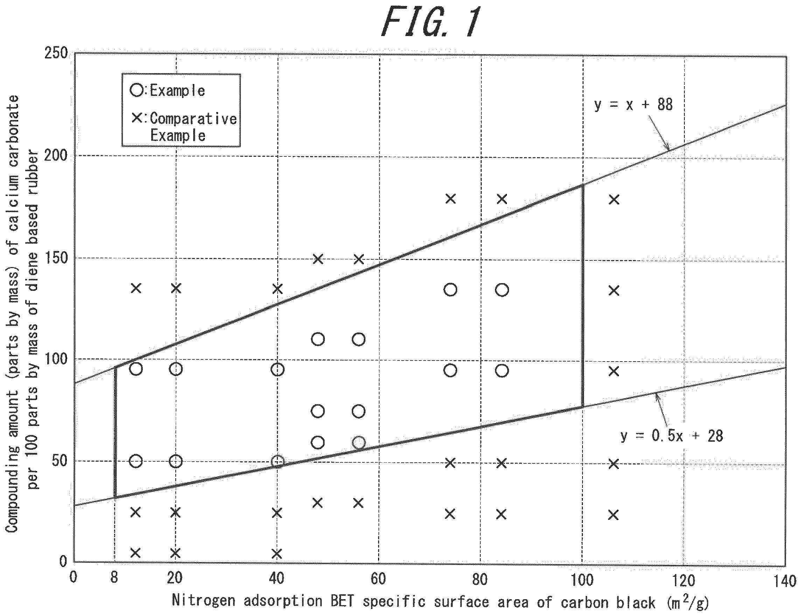

FIG. 1 is a plot chart illustrating the correlation between the nitrogen adsorption BET specific surface area of the carbon black and the compounding amount of the calcium carbonate in the disclosed rubber composition.

DETAILED DESCRIPTION

<Rubber composition>

The following describes one of the disclosed embodiments in detail.

The disclosed rubber composition is obtainable by compounding at least a rubber component containing a diene based rubber, a wet silica, a carbon black and a calcium carbonate, and further compounding other components if necessary.

(Rubber component)

The disclosed rubber composition needs to contain a diene based rubber as a rubber component. The diene based rubber is capable of exhibiting performances such as high elasticity and high heat resistance via vulcanization. The diene based rubber is not specifically limited and may be appropriately selected depending on the purpose. Examples include natural rubber (NR); and diene based synthetic rubbers such as butadiene rubber (BR), styrene-butadiene rubber (SBR), isoprene rubber (IR), chloroprene rubber (CR), ethylene-propylene-diene rubber (EPDM), acrylonitrile-butadiene rubber (NBR) and butyl rubber (IIR). These may be used singly or in combination of two or more.

In particular, the disclosed rubber composition preferably contains a natural rubber and a styrene-butadiene rubber, from a viewpoint of improving adhesiveness to a reinforcing member.

The ratio of the diene based rubber in the rubber component of the disclosed rubber composition is not specifically limited and may be appropriately selected depending on the purpose, but is preferably 80 mass% or more, more preferably 90 mass% or more, particularly preferably 100 mass%. The ratio of the diene based rubber in the rubber component of 80 mass% or more improves adhesiveness between the obtained rubber composition and a reinforcing member is improved, improves durability of a rubber product using a laminated body of a layer containing the rubber composition and a reinforcing member layer.

In the case of using both a natural rubber and a styrene-butadiene rubber as the diene based rubber, the ratio of the compounding amount of the natural rubber to the total compounding amount of the natural rubber and the styrene-butadiene rubber is preferably 20 mass% or more, and preferably 60 mass% or less. The ratio of the compounding amount of the natural rubber of 20 mass% or more improves the mechanical strength of a rubber member or rubber product using the obtained rubber composition, and on the other hand, the ratio of the compounding amount of the natural rubber of 60 mass% or less improves wear resistance and film thickness stability of a rubber member or rubber product using the obtained rubber composition. From the same viewpoint, the ratio of the compounding amount of the natural rubber to the total compounding amount of the natural rubber and the styrene-butadiene rubber is more preferably 30 mass% or more, and more preferably 50 mass% or less.

Moreover, in the case of using both a natural rubber and a styrene-butadiene rubber as the diene based rubber, the ratio of the compounding amount of the styrene-butadiene rubber to the total compounding amount of the natural rubber and the styrene-butadiene rubber is preferably 40 mass% or more, and preferably 80 mass% or less. The ratio of the compounding amount of the styrene-butadiene rubber of 40 mass% or more improves aging resistance of a rubber member or rubber product using the obtained rubber composition, and on the other hand, the ratio of the compounding amount of the styrene-butadiene rubber of 80 mass% or less improves flex cracking resistance of a rubber member or rubber product using the obtained rubber composition. From the same viewpoint, the ratio of the compounding amount of the styrene-butadiene rubber to the total compounding amount of the natural rubber and the styrene-butadiene rubber is more preferably 50 mass% or more, and more preferably 70 mass% or less.

Other than the diene based rubber, the disclosed rubber composition may also contain a non-diene based rubber (a rubber component other than diene based rubber) as the rubber component, and may use a non-diene based rubber ordinarily used in rubber products without being specifically limited.

Moreover, in the disclosed rubber composition, a reclaimed rubber containing a diene based rubber and optionally a non-diene based rubber may be used. In the case of using a reclaimed rubber in the disclosed rubber composition, regarding its compounding amount, a polymer component in the reclaimed rubber is preferably 20 mass% or less with respect to a total amount of compounded polymers, from a viewpoint of sufficiently ensuring quality of a rubber product using the obtained rubber composition.

(Wet silica)

The disclosed rubber composition needs to contain a wet silica. The wet silica may be obtained by, for example, using sodium silicate as a raw material, neutralizing its water solution to precipitate silica, filtering, and drying. The wet silica is classified into precipitated silica and gel process silica, both of which may be used. By using the wet silica in the rubber composition, it is possible to improve adhesiveness between such rubber composition and a reinforcing member such as organic fiber. The reason has not been clarified, but it is considered that the unique high polarity of wet silica contributes to improvement of adhesiveness. The wet silica may be used singly or in combination of two or more.

The nitrogen adsorption BET specific surface area ($N_2SA$) of the wet silica used in the disclosed rubber composition is not specifically limited and may be appropriately selected depending on the purpose, but is preferably 80 $m^2$/g or more. The nitrogen adsorption BET specific surface area of the wet silica of 80 $m^2$/g or more raises polarity of the rubber composition, and further improves adhesiveness between the rubber composition and a reinforcing member. Moreover, the nitrogen adsorption BET specific surface area of the wet silica of 80 $m^2$/g or more maintains sufficient dispersity of the carbon black, and maintains sufficient dispersity of the wet silica and the calcium carbonate. From the same viewpoint, the nitrogen adsorption BET specific surface area of the wet silica is more preferably 120$m^2$/g or more, even more preferably more than 200 $m^2$/g. Further, the nitrogen adsorption BET specific surface area of the wet silica is preferably 300 $m^2$/g or less, more preferably 250 $m^2$/g or less from a viewpoint of suppressing scattering of the materials during kneading, etc.

The nitrogen adsorption BET specific surface area of the wet silica may be measured according to ISO5794-1.

The average primary particle size of the wet silica used in the disclosed rubber composition is not specifically limited and may be appropriately selected depending on the purpose, but is preferably 10 nm or more. The average primary particle size of the wet silica of 10 nm or more suppresses reduction of the productivity due to scattering, etc. during kneading.

The average primary particle size of the wet silica may be determined via calculation by using, for example, transmission electron microscope electron microscope image and/or BET specific surface area. Examples of the method for calculating the BET specific surface area include conventionally well-known methods, such as "Nanomaterial Information Provision Sheet: Amorphous Colloidal Silica (as of March, 2011) Reference 6." published by METI.

The compounding amount of a wet silica in the disclosed rubber composition needs to be 3 parts by mass or more per 100 parts by mass of the diene based rubber. The compounding amount of a wet silica in the rubber composition of less than 3 parts by mass per 100 parts by mass of the diene based polymer may cause insufficient improvement effect of adhesiveness to a reinforcing member obtained by compounding the wet silica. On the other hand, the compounding amount of a wet silica in the disclosed rubber composition is preferably 25 parts by mass or less per 100 parts by mass of the diene based rubber. The compounding amount of a wet silica in the rubber composition of 25 parts by mass or less per 100 parts by mass of the diene based rubber inhibits deterioration of productivity of a rubber product using such rubber composition due to excessively long time required for vulcanization and increase of viscosity of an unvulcanized rubber composition. The compounding amount of a wet silica in the rubber composition is more preferably 4 parts by mass or more, and more preferably 9 parts by mass or less from the same viewpoint.

(Carbon black)

The disclosed rubber composition needs to contain a carbon black. The carbon black, as a reinforcing filler, has a function of improving the modulus and the wear resistance of the rubber composition, and appropriately improving adhesiveness between this rubber composition and a reinforcing member, particularly a reinforcing member in environmental degradation. The carbon black may be used singly or in combination of two or more.

The nitrogen adsorption BET specific surface area ($N_2SA$) of the carbon black used in the disclosed rubber composition needs to be 8 $m^2/g$ or more and 100 $m^2/g$ or less. The nitrogen adsorption BET specific surface area ($N_2SA$) of the carbon black of less than 8 $m^2/g$ may be incapable of improving peel strength between the rubber composition and a reinforcing member. The nitrogen adsorption BET specific surface area ($N_2SA$) of the carbon black of more than 100 $m^2/g$ may cause deterioration of productivity such as scattering resistance, reliability, etc. during manufacture of the rubber composition, and/or deterioration of dispersibility in the rubber composition during kneading, and the like. The nitrogen adsorption BET specific surface area ($N_2SA$) of the carbon black is preferably 25 $m^2/g$ or more, and more preferably 30 $m^2/g$ or more, in order to improve peel strength between the rubber composition and a reinforcing member, and to ensure sufficient reinforcement performance. The nitrogen adsorption BET specific surface area ($N_2SA$) of the carbon black is preferably 70 $m^2/g$ or less, and more preferably 48 $m^2/g$ or less, in order to ensure high dispersibility in the rubber composition during kneading while ensuring sufficient productivity such as scattering resistance and reliability during manufacture.

The nitrogen adsorption BET specific surface area of the carbon black may be measured with, for example, a conventionally publicly-known method.

The compounding amount of the carbon black in the disclosed rubber composition is not specifically limited and may be appropriately selected depending on the purpose, but is preferably 10 parts by mass or more and preferably 100 parts by mass or less per 100 parts by mass of the diene based rubber. The compounding amount of the carbon black in the rubber composition of 10 parts by mass or more per 100 parts by mass of the diene based rubber further improves the peel strength between this rubber composition and a reinforcing member. Moreover, the compounding amount of the carbon black in the rubber composition of 100 parts by mass or less per 100 parts by mass of the diene based rubber ensures high dispersibility in the rubber composition during kneading, and improves the operability when peeling off a layer containing this rubber composition from a reinforcing member layer, for example, during endless processing of the conveyor belt. From the same viewpoint, the compounding amount of the carbon black in the rubber composition is more preferably 30 parts by mass or more, and more preferably 50 parts by mass or less per 100 parts by mass of the diene based rubber.

In the disclosed rubber composition, a total compounding amount of the aforementioned wet silica and carbon black is preferably 30 parts by mass or more, and preferably 80 parts by mass or less per 100 parts by mass of the diene based rubber. The total compounding amount of the wet silica and the carbon black of 30 parts by mass or more per 100 parts by mass of the diene based rubber obtains a rubber composition with excellent peel strength with a reinforcing member and sufficiently high adhesiveness to the reinforcing member, and suppresses deterioration of adhesiveness between the rubber composition and a reinforcing member after being subjected to repeated flex fatigue. Moreover, the total compounding amount of the wet silica and the carbon black of 80 parts by mass or less per 100 parts by mass of the diene based rubber suppresses reduction of the productivity of a rubber product using such rubber composition due to excessively long time needed for vulcanization. From the same viewpoint, the total compounding amount of the wet silica and the carbon black in the rubber composition is more preferably 40 parts by mass or more, and more preferably 55 parts by mass or less per 100 parts by mass of the diene based rubber.

(Calcium carbonate)

The disclosed rubber composition needs to contain a calcium carbonate. The calcium carbonate has a function reducing breaking resistance of the rubber composition to thereby improve adhesiveness of the rubber composition with a reinforcing member such as organic fibers and other rubber members. The calcium carbonate may be used singly or in combination of two or more.

The average primary particle size of the calcium carbonate used in the disclosed rubber composition is not specifically limited and may be appropriately selected depending on the purpose, but is preferably 0.5 $\mu$m or more. The average primary particle size of the calcium carbonate of 0.5 $\mu$m or more sufficiently improves adhesiveness between the rubber composition and a reinforcing members.

Moreover, the average primary particle size of the calcium carbonate is more preferably 0.8 $\mu$m or more, and more preferably 13 $\mu$m or less. The average primary particle size of the calcium carbonate of 0.8 $\mu$m or more suppresses rise of viscosity of unvulcanized rubber composition, and brings stable film thickness stability. Moreover, the average primary particle size of the calcium carbonate of 13 $\mu$m or less suppresses deterioration of the modulus and tear strength of vulcanized rubber composition, and obtains stable reinforcing effect. From the same viewpoint, the average primary particle size of the calcium carbonate is more preferably 1.0 $\mu$m or more, further more preferably 2.0 $\mu$m or more, and more preferably 12.0 $\mu$m or less.

The average primary particle size of the calcium carbonate may be measured by, for example, observing with a scanning electron microscope.

The calcium carbonate used in the disclosed rubber composition aims to bring excellent dispersity in the rubber composition, and thus a calcium carbonate subjected to surface treatment by using an organic material if necessary.

The compounding amount of the calcium carbonate in the disclosed rubber composition is preferably 70 parts by mass or more and preferably 120 parts by mass or less per 100 parts by mass of the diene based rubber. The compounding amount of the calcium carbonate in the rubber composition of 70 parts by mass or more per 100 parts by mass of the diene based rubber suppresses cost increase of the rubber composition, and suppresses deterioration of operability due to close contact with a bumbary, a roll, etc. by maintaining appropriate viscosity of an unvulcanized rubber composition. The compounding amount of the calcium carbonate in the rubber composition of 120 parts by mass or less per 100 parts by mass of the diene based rubber suppresses deterioration of peel strength between the rubber composition and a reinforcing member due to excessive decrease of a cohesion tearing force of the rubber composition, suppresses deterioration of productivity during rolling which uses a roll due to unvulcanized rubber composition floating from the roll and thus is not provided with sufficient shearing heat, and sufficiently improves dispersity in the rubber composition during kneading using a Banbury mixer, a Brabender mixer, a kneader, etc. From the same viewpoint, the compounding amount of the calcium carbonate in the rubber composition is preferably 100 parts by mass or less, and more preferably 95 parts by mass or less.

The rubber composition needs to satisfy the following formula (1):

$$0.5X+28 \leq Y \leq X+88 \ldots (1)$$

where X represents the nitrogen adsorption BET specific surface area of the carbon black in terms of m$^2$/g, and Y represents a compounding amount of the calcium carbonate in terms of parts by mass per 100 parts by mass of the diene based rubber. With this configuration, such rubber composition is capable of suppressing deterioration of adhesiveness with a reinforcing member even in the case of having been subjected to repeated flex fatigue. Although the reason thereof is still uncertain, it can be estimated that synergy of satisfaction of each of the aforementioned conditions improves dispersity of each filler in the rubber composition (carbon black, wet silica and calcium carbonate), and suppresses heat buildup of the rubber when being subjected to repeated flex fatigue. Here, if "0.5X+28$\leq$Y" is not satisfied and/or "Y$\leq$X+88" is not satisfied, adhesiveness is greatly deteriorated in the case of having been subjected to repeated flex fatigue.

For reference, FIG. 1 illustrates a chart relating to the aforementioned formula. We have statistically obtained the aforementioned formula by discovering the correlation between a combination of the amount of the compounded calcium carbonate and the specific surface area of the compounded carbon black and adhesiveness and flex fatigue resistance of the obtained rubber composition and performing repeated experiments under various conditions.

Here, when a carbon black "CB1" having a nitrogen adsorption BET specific surface area of $x_1$ (m$^2$/g) and a carbon black "CB2" having a nitrogen adsorption BET specific surface area of $x_2$ (m$^2$/g) are used in combination as the carbon black, for example, the aforementioned X can be calculated as follows. In the case of using three or more carbon blacks, the X can be calculated similarly.

$$X \ (\mathrm{m^2/g}) = x_1 \times (\text{mass ratio of CB1 to the total amount of carbon}$$

$$\text{black}) + x_2 \times (\text{mass ratio of CB2 to the total amount of carbon black})$$

(Other components)

In the disclosed rubber composition, other than the aforementioned rubber component, wet silica, carbon black and calcium carbonate, compounding ingredients ordinarily used in the rubber industry, for example, a vulcanizing agent such as sulfur, a vulcanization accelerator, a vulcanization accelerator aid such as zinc oxide, a softener, an age resistor, an antiscorching agent, a processing aid, a lubricant, a wet silica, a filler other than carbon black and calcium carbonate, a filler modifier, a tackifier, a colorant, etc. may be used appropriately depending on the purpose.

In the case of using sulfur as a vulcanizing agent to the disclosed rubber composition, its compounding amount is preferably 1.5 parts by mass or more and 3 parts by mass or less per 100 parts by mass of the diene based rubber, from a viewpoint of effectively vulcanization at a minimum necessary amount,.

(Preparation of rubber composition)

The disclosed rubber composition may be prepared by, for example, kneading the aforementioned components by using a Banbury mixer, a Brabender mixer, a kneader, etc.

The rubber composition thus prepared is capable of suppressing deterioration of adhesiveness with a reinforcing member even in the case of being subjected to repeated flex fatigue. Due to such feature, the disclosed rubber composition may be preferably used in manufacture of rubber products such as tires for automobiles, conveyor belts, and hoses. Specifically, when manufacturing a rubber product, it is possible to arrange this rubber composition between reinforcing members, or between a rubber member and a reinforcing member, to firmly adhere these members. In other words, the disclosed rubber composition may be used as an adhesive rubber composition. This rubber composition may be used, for example, to a conveyor belt in a layered shape, by laminating with reinforcing member layers. Furthermore, during endless processing of such conveyor belt, after peeling off reinforcing members from each other or peeling off a rubber member from a reinforcing member adhered by the aforementioned rubber composition, and then re-adhering these by using a rubber for endless adhesion, it is possible to perform firm adhesion.

The "rubber member" herein refers to any member containing at least a rubber component used in manufacture of a rubber product.

<Laminated body>

The disclosed laminated body is obtainable by laminating and adhering at least a layer containing the disclosed rubber composition (hereinafter also referred to as "the present rubber composition layer") and a reinforcing member layer to each other. In other words, the disclosed laminated body is obtainable by laminating and adhering the present rubber composition layer and the reinforcing member layer to each other. Such laminated body has the layer containing the rubber composition and the reinforcing member layer, which are firmly adhered to each other, and thus is capable of improving flex fatigue resistance of a rubber product. The disclosed laminated body is inclusive of a laminated body obtainable by alternately laminating and adhering a plurality of the present rubber composition layers and one or a plurality of the reinforcing member layers to one another, and is also inclusive of a laminated body obtainable by laminating and adhering the present rubber composition layer onto both sides of a reinforcing member layer, and further laminating two or more of a product obtained thereby. Moreover, in addition to a layer containing the disclosed rubber composition, the disclosed laminated body may also include a rubber layer other than a layer containing the disclosed rubber composition.

(The present rubber composition layer)

The present rubber composition layer may be one obtainable by shaping the disclosed rubber composition into a sheet-like shape by using an apparatus such as a rolling roll and an extruder.

The thickness of the present rubber composition layer is not specifically limited and may be appropriately selected depending on the purpose, but is preferably 0.2 mm or more and 2 mm or less, from a viewpoint of suppression of rubber breakage during molding, and a viewpoint of thinning. In the case of using a plurality of the present rubber composition layers, thickness of each present rubber composition layer may be either identical or different.

(Reinforcing member layer)

The reinforcing member layer has a function of improving the reinforcement performance of rubber products such as tires for automobiles, conveyor belts, and hoses. Here, the reinforcing member layer is not particularly limited and may be appropriately selected depending on the purpose. The reinforcing member layer as an adhesion target of the present rubber composition layer is particularly preferably a layer including an organic fiber (hereinafter also referred to as "organic fiber layer"), more preferably a canvas layer formed of an organic fiber. The term "canvas" herein refers to a textile obtained by weaving fibers.

The material of the organic fiber is not specifically limited and may be appropriately selected depending on the purpose. Examples include fibers formed of aliphatic polyamides such as nylon; aromatic polyamides such as Kevlar; polyesters such as polyethylene terephthalate, polyethylene naphthalate, polyethylene succinate and polymethyl methacrylate; syndiotactic-1,2-polybutadiene; acrylonitrile-butadiene-styrene copolymer; polystyrene; and copolymers thereof. These may be used singly or in combination of two or more. For example, in the case of using a canvas formed of an organic fiber as the reinforcing member layer, warp and woof yarns of the canvas may be formed of different materials.

The reinforcing member layer may be an untreated organic fiber layer, but adhesivenessis preferably one including on at least a part of its surface, for example, its entire surface, a film containing resorcinol, formaldehyde, a condensate of resorcinol and formaldehyde, and a latex (hereinafter also referred to as "RFL film"), from a viewpoint of improving adhesiveness between the present rubber composition layer and the reinforcing member layer,.

The RFL film may be obtained by, for example, before laminating with the present rubber composition layer, immersing at least a part of the organic fiber, for example, the entire organic fiber, in a liquid containing resorcinol, formaldehyde, a partial condensate of resorcinol and formaldehyde, and a latex (hereinafter also referred to as "RFL dispersion"), and subjecting the same to heat treatment. Moreover, the partial condensate of resorcinol and formaldehyde may be obtained via resolification reaction. From a viewpoint of improving adhesiveness between the present rubber composition layer and the reinforcing member layer, examples of the latex to be contained in the RFL dispersion include vinyl pyridine latex, styrene-butadiene copolymer latex (SBR latex), natural rubber latex, acrylate copolymer based latex, butyl rubber latex, nitrile rubber latex, and chloroprene latex. These may be used singly or in combination of two or more.

When preparing the RFL dispersion, reaction catalysts such as acids and alkalis may be used together if necessary.

A mass ratio of the resorcinol, the formaldehyde, the partial condensate of resorcinol and formaldehyde, to the latex in the RFL dispersion is not specifically limited.

Specifically, the RFL film may be obtained by immersing a part or an entire organic fiber such as a canvas in the aforementioned RFL dispersion, removing extra attached liquid by passing the same between rolls or performing vacuum suction if necessary, and then performing one-phase or multiphase heat treatment.

Here, in order to accelerate the reaction and to reduce heat shrinkage in actual use, a final treatment temperature in the heat treatment is preferably 180°C or higher, particularly preferably 200°C or higher.

(Rubber layer other than the present rubber composition layer)

Moreover, the disclosed laminated body may include a rubber layer other than the present rubber composition layer on at least one outermost layer depending on the requirement of the desired rubber product. For example, in the case of using the disclosed laminated body to a conveyor belt, the laminated body may include on the outermost layer a rubber layer capable of functioning as a cover rubber. Here, the rubber layer capable of functioning as a cover rubber is not specifically limited. Examples thereof may be obtained by appropriately kneading: a polymer component containing a natural rubber (NR), a butadiene rubber (BR), a styrene-butadiene rubber (SBR), an isoprene rubber (IR), a chloroprene rubber (CR), an ethylene-propylene-dine rubber (EPDM), an acrylonitrile-butadiene rubber (NBR), a butyl rubber (IIR), etc., or a mixture thereof; and a vulcanizing agent such as sulfur, a vulcanization accelerator, a vulcanization accelerator aid such as zinc oxide, a softener, an age resistor, an antiscorching agent, a processing aid, a lubricant, a carbon black, a silica, calcium carbonate a filler modifier, a tackifier, a colorant, etc. depending on the purpose. Examples of the cover rubber include an upper cover rubber and a lower cover rubber, which may be rubber members of either the same type or different types.

In the case where the disclosed laminated body includes on the outermost layer a rubber layer other than the present rubber composition layer, such rubber layer is preferably adjacent on its inner side to the present rubber composition layer.

(Preparation of laminated body)

The method for laminating the present rubber composition layer, the reinforcing member layer, and optionally a rubber layer other than the present rubber composition layer is not specifically limited, and an ordinary method may be used for laminating.

Here, in the case of laminating with a conventionally known calendering process by using the present rubber composition layer and the reinforcing member layer, a laminated body A may first be manufactured, which includes a rubber composition layer - a reinforcing member layer - a rubber composition layer. This laminated body A may be directly used. Alternatively, two or more of the laminated bodies A may be laminated to one another so as to be used as use a laminated body B, depending on necessary properties of the rubber product such as conveyor belt (namely, the laminated body B will include [a rubber composition layer - a reinforcing member layer - a rubber composition layer - a rubber composition layer - a reinforcing member layer - a rubber composition layer] when formed by stacking two of the laminated bodies A to each other). Furthermore, for example, in manufacture of the conveyor belt, by laminating the aforementioned rubber layer capable of functioning as a cover rubber to the outermost surface of the laminated body A or of the laminated body B with an ordinary method, it is possible to prepare the disclosed laminated body. Examples of the aforementioned laminated body B used in manufacture of the conveyor belt may be obtained by overlapping two to eight laminated bodies A.

The method for adhering the laminated present rubber composition layer and the reinforcing member layer, and optionally the present rubber composition layer and a rubber layer other than the present rubber composition layer, is not specifically limited. Examples thereof include: a method of arranging the laminated rubber composition layer and reinforcing member layer, and optionally a rubber layer other than the present rubber composition layer, in a predetermined mold, and adhering via vulcanization (the so-called vulcanization molding).

The temperature of vulcanization is not specifically limited and may be appropriately selected depending on the purpose, but is preferably in a range of 130°C to 170°C from a viewpoint of sufficiently adhering the present rubber composition layer and the reinforcing member layer to each other, and simultaneously suppressing overvulcanization. Moreover, the vulcanization time is not specifically limited, but is preferably set appropriately so as to sufficiently conduct heat to the center of the laminate to perform vulcanization, in order to sufficiently adhere the present rubber composition layer and the reinforcing member layer to each other.

In a laminated body thus prepared, the present rubber composition layer and the reinforcing member, and optionally the present rubber composition layer and a rubber layer other than the present rubber composition layer, are firmly adhered to each other, and such adhesion is sufficiently maintained even in the case of having been subjected to repeated flex fatigue. Therefore, the laminated body thus prepared is capable of suppressing deterioration of durability that occurs over time, and may be suitably used in manufacture of rubber products required of high durability, such as tires for automobiles, conveyor belts, and hoses.

<Conveyor belt>

The disclosed conveyor belt contains the aforementioned disclosed laminated body. The disclosed conveyor belt is not specifically limited as long as the disclosed laminated body is used therefor.

As mentioned above, in the disclosed conveyor belt, the present rubber composition layer and the reinforcing member, and optionally the present rubber composition layer and a rubber layer other than the present rubber composition layer, are firmly adhered to each other, and such adhesion is sufficiently maintained even in the case of having been subjected to repeated flex fatigue. Therefore, the disclosed conveyor belt is capable of suppressing deterioration of durability that occurs over time. In other words, such conveyor belt has firmly adhered layer of rubber composition and reinforcing member layer, and has high flex fatigue resistance.

EXAMPLES

The following describes the presently disclosed tire in more detail through examples. However, the presently disclosed tire is not in any way limited by the following examples and suitable alterations may be made that do not change the essence thereof.

<Preparation of rubber composition>

A Banbury mixer is used to prepare an unvulcanized rubber composition through addition of: a processing aid, a lubricant, sulfur, a vulcanization accelerator and zinc oxide to the formulation as listed in Tables 1 to 4 (unit: parts by mass) at amounts selected according to an ordinary method.

FIG. 1 illustrates plots of the nitrogen adsorption BET specific surface area X ($m^2$/g) of the carbon black and the compounding amount Y (parts by mass) of the calcium carbonate per 100 parts by mass of the diene based rubber relating to each Example and each Comparative Example.

<Preparation of reinforcing member layer>

A piece of canvas cloth including warp yarns formed of polyethylene terephthalate (number of twist: 16 T/10cm, number of yarn: 83/5cm) and woof yarns formed of nylon (number of twist: 12 T/10cm, number of yarn: 32/5cm) was prepared. On the other hand, resorcinol, formalin, water and an alkaline reaction catalyst, were sequentially mixed and stirred, so as to partially proceed a condensation reaction of resorcinol and formaldehyde, and then an SBR latex, a vinyl pyridine latex and water were mixed and stirred, to thereby prepare an RFL dispersion. Then, the aforementioned piece of canvas cloth was entirely immersed in the RFL dispersion thus obtained. The immersed piece of canvas cloth was subjected to drying and heat treatment until the final treatment temperature fell within a range of 210°C to 240°C, and a "reinforcing member layer" including an RFL film on its surface was obtained. When forming the RFL film in the reinforcing member layer, the RFL dispersion was adjusted until a latex concentration in terms of the SBR latex and the vinyl pyridine latex in the RFL film in total became 83 mass%.

<Preparation of laminated body sample>

First, separately from the laminated body sample, the aforementioned unvulcanized rubber composition was cut into a block shape with a weight of 8±1 g, so as to determine the 90% vulcanization time at 155°C ($t_c$(90)) with a Curelastometer ("CURELASTOMETER7", manufactured by JSR corporation) according to JIS K6300-2 and ISO6502.
Next, by using the aforementioned unvulcanized rubber composition, a rubber composition layer with a thickness of 0.7 mm was manufactured with a 6-inch diameter rolling roll. Next, by using this rubber composition layer and the aforementioned reinforcing member layer, an unvulcanized laminated body sample of a 7-layer structure of [rubber composition layer A - reinforcing member layer - rubber composition layer B - reinforcing member layer - rubber composition layer C - reinforcing member layer-rubber composition layer D] was prepared. This unvulcanized laminated body sample was vulcanized within a predetermined mold at 148°C for a time that is 1.5 times the $t_c$(90) determined as mentioned above, left to stand overnight at room temperature, so as to obtain a "vulcanized laminated body sample I".
Note that the aforementioned rubber composition layers A to D were each prepared from a rubber composition of the same type.

<Application of repeated bending load to vulcanized laminated body sample>

After preparing a laminated body sample that is similar to the aforementioned vulcanized laminated body sample I, a part thereof was cut into a width of 25 mm, and was applied with flex fatigue via a pulley portion by using a "high-tension flex fatigue tester SER.2099" manufactured by Takachihoseiki Co.,Ltd., so as to obtain a "vulcanized laminated body sample II" and a "vulcanized laminated body sample III". Here, the "vulcanized laminated body sample II" was obtained by applying flex fatigue for 100,000 cycles under the conditions of initial tension: 0.3 kN, rate: 60 cycles/min, and pulley diameter: 125 mm, and the "vulcanized laminated body sample III" was obtained similarly except that flex fatigue was applied for 200,000 cycles. During the test, the laminated body samples were arranged such that their rubber composition layers D are on the side in contact with the pulley.
Then, a peel test on the rubber composition layer and the reinforcing member layer was performed according to the following procedure, by using the vulcanized laminated body sample I, which was not subjected to repeated bending load, and the vulcanized laminated body sample II and the vulcanized laminated body sample III, which were subjected to repeated bending load.

(Peel test on rubber composition layer and reinforcing member layer)

The aforementioned vulcanized laminated body samples I, II, and III were cut into a width of 25 mm in the warp direction, and then cuts of 10 mm to 20 mm were opened with a knife on a part of the rubber composition layer B (as for the vulcanized laminated body samples II and III, a part of the rubber composition layer B at a location in contact with the pulley when subjected to bending load). A peel test was performed with an "Auto Rubber Universal Testing Machine AC-10kN" manufactured by TSE Corporation, in which the sample was peeled off from the cut portions. The peel angle was 90° and the peel speed was 50 mm/min. The amount of rubber remaining on the reinforcing member layer after this test (rubber attachment amount) was evaluated according to the method described below. Specifically, the two reinforcing members adjacent to the rubber composition layer B after the peeling were visually inspected, so as to choose the one having a smaller rubber attachment amount, so as to take a sample photo of its rubber attachment surface. Next, the sample photo thus taken was subjected to image thresholding so as to be separated into a rubber component and a reinforcing member layer component, and was subjected to area calculation with an image processing software, so as to determine the rubber attachment amount (unit: %). The resulting rubber attachment amount of the vulcanized laminated body sample I was defined as "rubber attachment amount I", the resulting rubber attachment amount of the vulcanized laminated body sample II was defined as "rubber attachment amount II", and the resulting rubber attachment amount of the vulcanized laminated body sample III was defined as "rubber attachment amount III". The initial rubber attachment amount was evaluated based on the value of the rubber attachment amount I according to the following standard. The calculated value of [(rubber attachment amount II) / (rubber attachment amount I)] was evaluated as a rubber attachment amount retention ratio A, the calculated value of [(rubber attachment amount III) / (rubber attachment amount I)] was evaluated as a rubber attachment amount retention ratio B, which were evaluated according to the following standard. A higher rubber attachment amount retention ratio indicates that deterioration of adhesiveness of the reinforcing member is better suppressed even in the case of having been subjected to repeated flex fatigue. Tables 1 to 4 indicate the result of this evaluation.

- Evaluation of initial rubber attachment amount-

Rubber attachment amount I more than 60% ... Excellent
Rubber attachment amount I of 40% or more and less than 60% ... Good
Rubber attachment amount I less than 40%... Poor

- Evaluation of variation ratio of rubber attachment amount-

Rubber attachment amount retention ratio more than 0.9 ... 9
Rubber attachment amount retention ratio more than 0.8 and 0.9 or less ... 8
Rubber attachment amount retention ratio more than 0.7 and 0.8 or less ... 7
Rubber attachment amount retention ratio more than 0.6 and 0.7 or less ... 6
Rubber attachment amount retention ratio more than 0.5 and 0.6 or less ... 5
Rubber attachment amount retention ratio more than 0.4 and 0.5 or less ... 4
Rubber attachment amount retention ratio more than 0.3 and 0.4 or less ... 3
Rubber attachment amount retention ratio more than 0.2 and 0.3 or less ... 2
Rubber attachment amount retention ratio more than 0.1 and 0.2 or less ... 1

EP 3 424 997 A1

| | | | | | | | | | | | | | | | |
|---|---|---|---|---|---|---|---|---|---|---|---|---|---|---|---|
| Nitrogen adsorption BET specific surface area of carbon black (X) (m²/g): 48 | | | | | | | | | | | | | | | |
| ...on black 5 *7 Nitrogen adsorption BET specific surface area of carbon black (X) (m²/g): 56 | 0 | 0 | 0 | 0 | 0 | 0 | 0 | 0 | 0 | 0 | 0 | 0 | 0 | 0 | 0 |
| ...on black 6 *8 Nitrogen adsorption BET specific surface area of carbon black (X) (m²/g): 74 | 0 | 0 | 0 | 0 | 0 | 0 | 0 | 0 | 0 | 0 | 0 | 0 | 0 | 0 | 0 |
| ...on black 7 *9 Nitrogen adsorption BET specific surface area of carbon black (X) (m²/g): 84 | 0 | 0 | 0 | 0 | 0 | 0 | 0 | 0 | 0 | 0 | 0 | 0 | 0 | 0 | 0 |
| ...on black 8 *10 Nitrogen adsorption BET specific surface area of carbon black (X) (m²/g): 106 | 0 | 0 | 0 | 0 | 0 | 0 | 0 | 0 | 0 | 0 | 0 | 0 | 0 | 0 | 0 |
| ...silica 1 *11 | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| ...silica 2 *12 | 0 | 0 | 0 | 0 | 0 | 0 | 0 | 0 | 0 | 0 | 0 | 0 | 0 | 0 | 0 |
| ...silica 3 *13 | 0 | 0 | 0 | 0 | 0 | 0 | 0 | 0 | 0 | 0 | 0 | 0 | 0 | 0 | 0 |
| ...silica 4 *14 | 0 | 0 | 0 | 0 | 0 | 0 | 0 | 0 | 0 | 0 | 0 | 0 | 0 | 0 | 0 |
| ...silica 5 *15 | 0 | 0 | 0 | 0 | 0 | 0 | 0 | 0 | 0 | 0 | 0 | 0 | 0 | 0 | 0 |
| ...silica 6 *16 | 0 | 0 | 0 | 0 | 0 | 0 | 0 | 0 | 0 | 0 | 0 | 0 | 0 | 0 | 0 |
| ...silica 1 *17 | 0 | 0 | 0 | 0 | 0 | 0 | 0 | 0 | 0 | 0 | 0 | 0 | 0 | 0 | 0 |
| ...ium carbonate (Y) *18 | 5 | 25 | 50 | 95 | 135 | 5 | 25 | 50 | 95 | 135 | 5 | 25 | 50 | 95 | 135 |
| Suitability to formula (1) | Unsuitable | Unsuitable | Suitable | Suitable | Unsuitable | Unsuitable | Unsuitable | Suitable | Suitable | Unsuitable | Unsuitable | Unsuitable | Suitable | Suitable | Unsuitable |
| Evaluation — Evaluation of initial rubber attachment amount | Good | Good | Excellent | Excellent | Excellent | Good | Excellent | Excellent | Excellent | Excellent | Good | Good | Excellent | Excellent | Excellent | Good |
| Evaluation of rubber attachment amount retention ratio A | 2 | 4 | 5 | 5 | 4 | 3 | 4 | 6 | 7 | 4 | 3 | 4 | 8 | 9 | 4 |
| Evaluation of rubber attachment amount retention ratio B | 1 | 3 | 5 | 5 | 3 | 1 | 2 | 4 | 4 | 3 | 2 | 3 | 6 | 8 | 3 |

[Table 2]

| | | Comparative Example 10 | Example 7 | Example 8 | Example 9 | Comparative Example 11 | Comparative Example 12 | Example 10 | Example 11 | Example 12 | Comparative Example 13 | Comparative Example 14 | Comparative Example 15 | Example 13 | Example 14 | Comparative Example 16 | Comparative Example 17 |
|---|---|---|---|---|---|---|---|---|---|---|---|---|---|---|---|---|---|
| Natural rubber *1 | | 40 | 40 | 40 | 40 | 40 | 40 | 40 | 40 | 40 | 40 | 40 | 40 | 40 | 40 | 40 | 40 |
| Styrene-butadiene rubber *2 | | 60 | 60 | 60 | 60 | 60 | 60 | 60 | 60 | 60 | 60 | 60 | 60 | 60 | 60 | 60 | 60 |
| Carbon black 1 *3 Nitrogen adsorption BET specific surface area of carbon black (X) ($m^2$/g): 12 | | 0 | 0 | 0 | 0 | 0 | 0 | 0 | 0 | 0 | 0 | 0 | 0 | 0 | 0 | 0 | 0 |
| Carbon black 2 *4 Nitrogen adsorption BET specific surface area of carbon black (X) ($m^2$/g): 20 | | 0 | 0 | 0 | 0 | 0 | 0 | 0 | 0 | 0 | 0 | 0 | 0 | 0 | 0 | 0 | 0 |
| Carbon black 3 *5 Nitrogen adsorption BET specific surface area of carbon black (X) ($m^2$/g): 40 | | 0 | 0 | 0 | 0 | 0 | 0 | 0 | 0 | 0 | 0 | 0 | 0 | 0 | 0 | 0 | 0 |
| Carbon black 4 *6 Nitrogen adsorption BET specific surface area of carbon black (X) ($m^2$/g): 48 | | 37 | 37 | 37 | 37 | 37 | 0 | 0 | 0 | 0 | 0 | 0 | 0 | 0 | 0 | 0 | 0 |
| Carbon black 5 *7 Nitrogen adsorption BET specific surface area of carbon black (X) ($m^2$/g): 56 | | 0 | 0 | 0 | 0 | 0 | 37 | 37 | 37 | 37 | 37 | 0 | 0 | 0 | 0 | 0 | 0 |
| Carbon black 6 *8 Nitrogen adsorption BET specific surface area of carbon black (X) ($m^2$/g): 74 | | 0 | 0 | 0 | 0 | 0 | 0 | 0 | 0 | 0 | 0 | 37 | 37 | 37 | 37 | 37 | 0 |
| Carbon black 7 *9 Nitrogen adsorption BET specific surface area of carbon black (X) ($m^2$/g): 84 | | 0 | 0 | 0 | 0 | 0 | 0 | 0 | 0 | 0 | 0 | 0 | 0 | 0 | 0 | 0 | 37 |
| Carbon black 8 *10 Nitrogen adsorption BET specific surface area of carbon black (X) ($m^2$/g): 106 | | 0 | 0 | 0 | 0 | 0 | 0 | 0 | 0 | 0 | 0 | 0 | 0 | 0 | 0 | 0 | 0 |
| Wet silica 1 *11 | | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| Wet silica 2 *12 | | 0 | 0 | 0 | 0 | 0 | 0 | 0 | 0 | 0 | 0 | 0 | 0 | 0 | 0 | 0 | 0 |
| Wet silica 3 *13 | | 0 | 0 | 0 | 0 | 0 | 0 | 0 | 0 | 0 | 0 | 0 | 0 | 0 | 0 | 0 | 0 |
| Wet silica 4 *14 | | 0 | 0 | 0 | 0 | 0 | 0 | 0 | 0 | 0 | 0 | 0 | 0 | 0 | 0 | 0 | 0 |
| Wet silica 5 *15 | | 0 | 0 | 0 | 0 | 0 | 0 | 0 | 0 | 0 | 0 | 0 | 0 | 0 | 0 | 0 | 0 |
| Wet silica 6 *16 | | 0 | 0 | 0 | 0 | 0 | 0 | 0 | 0 | 0 | 0 | 0 | 0 | 0 | 0 | 0 | 0 |
| Dry silica 1 *17 | | 0 | 0 | 0 | 0 | 0 | 0 | 0 | 0 | 0 | 0 | 0 | 0 | 0 | 0 | 0 | 0 |
| Calcium carbonate (Y) *18 | | 30 | 60 | 75 | 110 | 150 | 30 | 60 | 75 | 110 | 150 | 25 | 50 | 95 | 135 | 180 | 25 |
| Suitability to formula (1) | | Unsuitable | Suitable | Suitable | Suitable | Unsuitable | Unsuitable | Suitable | Suitable | Suitable | Unsuitable | Unsuitable | Unsuitable | Suitable | Suitable | Unsuitable | Unsuitable |
| Evaluation | Evaluation of initial rubber attachment amount | Good | Excellent | Excellent | Excellent | Excellent | Good | Excellent | Excellent | Excellent | Excellent | Excellent | Good | Excellent | Excellent | Excellent | Good |
| | Evaluation of rubber attachment amount retention ratio A | 3 | 8 | 9 | 9 | 4 | 3 | 8 | 9 | 9 | 4 | 3 | 4 | 8 | 7 | 4 | 3 |
| | Evaluation of rubber attachment amount retention ratio B | 2 | 5 | 8 | 6 | 2 | 2 | 5 | 7 | 6 | 2 | 2 | 2 | 5 | 3 | 3 | 1 |

EP 3 424 997 A1

[Table 3]

| | Comparative Example 18 | Example 15 | Example 16 | Comparative Example 19 | Comparative Example 20 | Comparative Example 21 | Comparative Example 22 | Comparative Example 23 | Comparative Example 24 | Comparative Example 25 | Comparative Example 26 | Example 17 | Example 18 | Example 19 | Comparative Example 27 | Comparative Example 28 |
|---|---|---|---|---|---|---|---|---|---|---|---|---|---|---|---|---|
| Natural rubber *1 | 40 | 40 | 40 | 40 | 40 | 40 | 40 | 40 | 40 | 40 | 40 | 40 | 40 | 40 | 40 | 40 |
| Styrene-butadiene rubber *2 | 60 | 60 | 60 | 60 | 60 | 60 | 60 | 60 | 60 | 60 | 60 | 60 | 60 | 60 | 60 | 60 |
| Carbon black 1 *3 — Nitrogen adsorption BET specific surface area of carbon black (X) ($m^2$/g): 12 | 0 | 0 | 0 | 0 | 0 | 0 | 0 | 0 | 0 | 0 | 0 | 0 | 0 | 0 | 0 | 0 |
| Carbon black 2 *4 — Nitrogen adsorption BET specific surface area of carbon black (X) ($m^2$/g): 20 | 0 | 0 | 0 | 0 | 0 | 0 | 0 | 0 | 0 | 37 | 37 | 37 | 37 | 37 | 0 | 0 |
| Carbon black 3 *5 — Nitrogen adsorption BET specific surface area of carbon black (X) ($m^2$/g): 40 | 0 | 0 | 0 | 0 | 0 | 0 | 0 | 0 | 0 | 0 | 0 | 0 | 0 | 0 | 37 | 37 |
| Carbon black 4 *6 — Nitrogen adsorption BET specific surface area of carbon black (X) ($m^2$/g): 48 | 0 | 0 | 0 | 0 | 0 | 0 | 0 | 0 | 0 | 0 | 0 | 0 | 0 | 0 | 0 | 0 |
| Carbon black 5 *7 — Nitrogen adsorption BET specific surface area of carbon black (X) ($m^2$/g): 56 | 0 | 0 | 0 | 0 | 0 | 0 | 0 | 0 | 0 | 0 | 0 | 0 | 0 | 0 | 0 | 0 |
| Carbon black 6 *8 — Nitrogen adsorption BET specific surface area of carbon black (X) ($m^2$/g): 74 | 0 | 0 | 0 | 0 | 0 | 0 | 0 | 0 | 0 | 0 | 0 | 0 | 0 | 0 | 0 | 0 |
| Carbon black 7 *9 — Nitrogen adsorption BET specific surface area of carbon black (X) ($m^2$/g): 84 | 37 | 37 | 37 | 37 | 0 | 0 | 0 | 0 | 0 | 0 | 0 | 0 | 0 | 0 | 0 | 0 |
| Carbon black 8 *10 — Nitrogen adsorption BET specific surface area of carbon black (X) ($m^2$/g): 106 | 0 | 0 | 0 | 0 | 37 | 37 | 37 | 37 | 37 | 0 | 0 | 0 | 0 | 0 | 0 | 0 |
| Wet silica 1 *11 | 4.5 | 4.5 | 4.5 | 4.5 | 4.5 | 4.5 | 4.5 | 4.5 | 4.5 | 0 | 2 | 9 | 14 | 21 | 0 | 2 |
| Wet silica 2 *12 | 0 | 0 | 0 | 0 | 0 | 0 | 0 | 0 | 0 | 0 | 0 | 0 | 0 | 0 | 0 | 0 |
| Wet silica 3 *13 | 0 | 0 | 0 | 0 | 0 | 0 | 0 | 0 | 0 | 0 | 0 | 0 | 0 | 0 | 0 | 0 |
| Wet silica 4 *14 | 0 | 0 | 0 | 0 | 0 | 0 | 0 | 0 | 0 | 0 | 0 | 0 | 0 | 0 | 0 | 0 |
| Wet silica 5 *15 | 0 | 0 | 0 | 0 | 0 | 0 | 0 | 0 | 0 | 0 | 0 | 0 | 0 | 0 | 0 | 0 |
| Wet silica 6 *16 | 0 | 0 | 0 | 0 | 0 | 0 | 0 | 0 | 0 | 0 | 0 | 0 | 0 | 0 | 0 | 0 |
| Dry silica 1 *17 | 0 | 0 | 0 | 0 | 0 | 0 | 0 | 0 | 0 | 0 | 0 | 0 | 0 | 0 | 0 | 0 |
| Calcium carbonate (Y) *18 | 50 | 95 | 135 | 180 | 25 | 50 | 95 | 135 | 180 | 95 | 95 | 95 | 95 | 95 | 95 | 95 |
| Suitability to formula (1) | Unsuitable | Suitable | Suitable | Unsuitable | Unsuitable | Unsuitable | Suitable | Suitable | Suitable | Suitable | Suitable | Suitable | Suitable | Suitable | Suitable | Suitable |
| Evaluation — Evaluation of initial rubber attachment amount | Excellent | Excellent | Excellent | Good | Good | Good | Excellent | Excellent | Excellent | Good | Good | Excellent | Excellent | Excellent | Good | Excellent |
| Evaluation — Evaluation of rubber attachment amount retention ratio A | 4 | 6 | 6 | 4 | 2 | 3 | 4 | 4 | 4 | 2 | 4 | 6 | 6 | 5 | 3 | 4 |
| Evaluation — Evaluation of rubber attachment amount retention ratio B | 2 | 5 | 4 | 2 | 1 | 2 | 3 | 3 | 2 | 1 | 2 | 4 | 5 | 4 | 2 | 3 |

[Table 4]

| | Example 20 | Example 21 | Example 22 | Example 23 | Example 24 | Example 25 | Example 26 | Example 27 | Comparative Example 29 | Example 28 | Example 29 | Example 30 | Example 31 | Example 32 | Comparative Example 30 |
|---|---|---|---|---|---|---|---|---|---|---|---|---|---|---|---|
| Natural rubber *1 | 40 | 40 | 40 | 40 | 40 | 40 | 40 | 40 | 40 | 40 | 40 | 40 | 40 | 40 | 40 |
| Styrene-butadiene rubber *2 | 60 | 60 | 60 | 60 | 60 | 60 | 60 | 60 | 60 | 60 | 60 | 60 | 60 | 60 | 60 |
| Carbon black 1 *3 Nitrogen adsorption BET specific surface area of carbon black (X) (m²/g): 12 | 0 | 0 | 0 | 0 | 0 | 0 | 0 | 0 | 0 | 0 | 0 | 0 | 0 | 0 | 0 |
| Carbon black 2 *4 Nitrogen adsorption BET specific surface area of carbon black (X) (m²/g): 20 | 0 | 0 | 0 | 37 | 37 | 37 | 37 | 37 | 37 | 0 | 0 | 0 | 0 | 0 | 0 |
| Carbon black 3 *5 Nitrogen adsorption BET specific surface area of carbon black (X) (m²/g): 40 | 37 | 37 | 37 | 0 | 0 | 0 | 0 | 0 | 0 | 37 | 37 | 37 | 37 | 37 | 37 |
| Carbon black 4 *6 Nitrogen adsorption BET specific surface area of carbon black (X) (m²/g): 48 | 0 | 0 | 0 | 0 | 0 | 0 | 0 | 0 | 0 | 0 | 0 | 0 | 0 | 0 | 0 |
| Carbon black 5 *7 Nitrogen adsorption BET specific surface area of carbon black (X) (m²/g): 56 | 0 | 0 | 0 | 0 | 0 | 0 | 0 | 0 | 0 | 0 | 0 | 0 | 0 | 0 | 0 |
| Carbon black 6 *8 Nitrogen adsorption BET specific surface area of carbon black (X) (m²/g): 74 | 0 | 0 | 0 | 0 | 0 | 0 | 0 | 0 | 0 | 0 | 0 | 0 | 0 | 0 | 0 |
| Carbon black 7 *9 Nitrogen adsorption BET specific surface area of carbon black (X) (m²/g): 84 | 0 | 0 | 0 | 0 | 0 | 0 | 0 | 0 | 0 | 0 | 0 | 0 | 0 | 0 | 0 |
| Carbon black 8 *10 Nitrogen adsorption BET specific surface area of carbon black (X) (m²/g): 106 | 0 | 0 | 0 | 0 | 0 | 0 | 0 | 0 | 0 | 0 | 0 | 0 | 0 | 0 | 0 |
| Wet silica 1 *11 | 9 | 14 | 21 | 0 | 0 | 0 | 0 | 0 | 0 | 0 | 0 | 0 | 0 | 0 | 0 |
| Wet silica 2 *12 | 0 | 0 | 0 | 4.5 | 0 | 0 | 0 | 0 | 0 | 4.5 | 0 | 0 | 0 | 0 | 0 |
| Wet silica 3 *13 | 0 | 0 | 0 | 0 | 4.5 | 0 | 0 | 0 | 0 | 0 | 4.5 | 0 | 0 | 0 | 0 |
| Wet silica 4 *14 | 0 | 0 | 0 | 0 | 0 | 4.5 | 0 | 0 | 0 | 0 | 0 | 4.5 | 0 | 0 | 0 |
| Wet silica 5 *15 | 0 | 0 | 0 | 0 | 0 | 0 | 4.5 | 0 | 0 | 0 | 0 | 0 | 4.5 | 0 | 0 |
| Wet silica 6 *16 | 0 | 0 | 0 | 0 | 0 | 0 | 0 | 4.5 | 0 | 0 | 0 | 0 | 0 | 4.5 | 0 |
| Dry silica 1 *17 | 0 | 0 | 0 | 0 | 0 | 0 | 0 | 0 | 4.5 | 0 | 0 | 0 | 0 | 0 | 4.5 |
| Calcium carbonate (Y) *18 | 95 | 95 | 95 | 95 | 95 | 95 | 95 | 95 | 95 | 95 | 95 | 95 | 95 | 95 | 95 |
| Suitability to formula (1) | Suitable | Suitable | Suitable | Suitable | Suitable | Suitable | Suitable | Suitable | Suitable | Suitable | Suitable | Suitable | Suitable | Suitable | Suitable |
| Evaluation — Evaluation of initial rubber attachment amount | Excellent | Excellent | Excellent | Excellent | Excellent | Excellent | Excellent | Excellent | Excellent | Excellent | Excellent | Excellent | Excellent | Excellent | Excellent |
| Evaluation — Evaluation of rubber attachment amount retention ratio A | 8 | 8 | 8 | 5 | 5 | 6 | 5 | 5 | 4 | 5 | 5 | 7 | 6 | 6 | 4 |
| Evaluation — Evaluation of rubber attachment amount retention ratio B | 6 | 5 | 5 | 4 | 4 | 4 | 5 | 4 | 2 | 4 | 4 | 5 | 5 | 4 | 2 |

*1 Natural rubber ... Grade; No. RSS-4

2 Styrene-butadiene rubber ... "TAFDEN 2000R", manufactured by Asahi Kasei Chemicals Corporation

*3 Carbon black 1 ... "ASAHI#8", manufactured by Asahi Carbon Co., Ltd., nitrogen adsorption BET specific surface area: 12 $m^2$/g

*4 Carbon black 2 ... "ASAHI#51", manufactured by Asahi Carbon Co., Ltd., nitrogen adsorption BET specific surface area: 20 $m^2$/g

*5 Carbon black 3 ... "ASAHI#60", manufactured by Asahi Carbon Co., Ltd., nitrogen adsorption BET specific surface area: 40 $m^2$/g

*6 Carbon black 4 ... "ASAHI#60HN", manufactured by Asahi Carbon Co., Ltd., nitrogen adsorption BET specific surface area: 48 $m^2$/g

*7 Carbon black 5 ... "SEAST 116HM", manufactured by Tokai Carbon Co., Ltd., nitrogen adsorption BET specific surface area: 56 $m^2$/g

*8 Carbon black 6 ... "SEAST N", manufactured by Tokai Carbon Co., Ltd., nitrogen adsorption BET specific surface area: 74 $m^2$/g

*9 Carbon black 7 ... "SEAST 300", manufactured by Tokai Carbon Co., Ltd., nitrogen adsorption BET specific surface area: 84 $m^2$/g

*10 Carbon black 8 ... "SEAST 600", manufactured by Tokai Carbon Co., Ltd., nitrogen adsorption BET specific surface area: 106 $m^2$/g

*11 Wet silica 1 ... "Nipsil AQ", manufactured by Tosoh Silica Corporation, nitrogen adsorption BET specific surface area: 205 $m^2$/g

*12 Wet silica 2 ... "Nipsil SS-50F", manufactured by Tosoh Silica Corporation, nitrogen adsorption BET specific surface area: 82 $m^2$/g

*13 Wet silica 3 ... "Nipsil SS-70", manufactured by Tosoh Silica Corporation, nitrogen adsorption BET specific surface area: 42 $m^2$/g

*14 Wet silica 4 ... "ULTRASIL VN3", manufactured by Evonic Degussa Corporation, nitrogen adsorption BET specific surface area: 175 $m^2$/g

*15 Wet silica 5 ... "Nipsil NA", manufactured by Tosoh Silica Corporation, nitrogen adsorption BET specific surface area: 135 $m^2$/g

*16 Wet silica 6 ... "Nipsil ER", manufactured by Tosoh Silica Corporation, nitrogen adsorption BET specific surface area: 95 $m^2$/g

*17 Dry silica 1 ... "AEROSIL 130", manufactured by Nippon Aerosil Co., Ltd., nitrogen adsorption BET specific surface area: 130 $m^2$/g

*18 Calcium carbonate ... "NS#100", manufactured by Nitto Funka

Kogyo K.K., average primary particle size: approximately 2 μm

According to Tables 1 to 4, the disclosed rubber composition, which is obtained by compounding a rubber component containing 100 parts by mass of a diene based rubber, 3 parts by mass or more of a wet silica, a carbon black having a nitrogen adsorption BET specific surface area of 8 m$^2$/g or more and 100 m$^2$/g or less, and a calcium carbonate, and which satisfies the following formula (1), had a larger rubber amount remaining on the reinforcing member layer after the peel test with the reinforcing member layer. Therefore, it is indicated that the rubber composition of this disclosure has excellent adhesiveness to a reinforcing member. Moreover, according to Tables 1 to 4, after the peel test with the reinforcing member layer, the disclosed rubber composition did not have a large difference of the rubber amount remaining on the reinforcing member layer between the case of not having been subjected to repeated bending load and the case of having been subjected to repeated bending load. Therefore, it is indicated that the disclosed rubber composition has high adhesiveness to a reinforcing member even in the case of having been subjected to repeated flex fatigue.

INDUSTRIAL APPLICABILITY

According to this disclosure, it is possible to provide a rubber composition capable of suppressing deterioration of adhesiveness to a reinforcing member even in the case of having been subjected to repeated flex fatigue. According to this disclosure, it is also possible to provide a laminated body using the aforementioned rubber composition, which is capable of suppressing deterioration of durability of a rubber product such as a conveyor belt and the like that occurs over time, and a conveyor belt using the aforementioned laminated body, which is capable of suppressing deterioration of durability that occurs over time.

**Claims**

1. A rubber composition obtainable by compounding a rubber component containing a diene based rubber, a wet silica, a carbon black, and a calcium carbonate, wherein:

   a compounding amount of the wet silica is 3 parts by mass or more per 100 parts by mass of the diene based rubber;
   a nitrogen adsorption BET specific surface area of the carbon black is 8 m$^2$/g or more and 100 m$^2$/g or less; and
   the following formula (1) is satisfied:

$$0.5X+28 \leq Y \leq X+88 \ ... \ (1)$$

   where X represents the nitrogen adsorption BET specific surface area of the carbon black in terms of m$^2$/g, and Y represents a compounding amount of the calcium carbonate in terms of parts by mass per 100 parts by mass of the diene based rubber.

2. The rubber composition according to claim 1, wherein:
   a compounding amount of the calcium carbonate is 120 parts by mass or less per 100 parts by mass of the diene based rubber.

3. The rubber composition according to any one of claims 1 or 2, wherein:
   the nitrogen adsorption BET specific surface area of the carbon black is 30 m$^2$/g or more.

4. The rubber composition according to any one of claims 1 to 3, wherein:
   an average primary particle size of the calcium carbonate is 0.8 μm or more and 13 μm or less.

5. The rubber composition according to any one of claims 1 to 4, wherein:
   the compounding amount of the wet silica is 25 parts by mass or less per 100 parts by mass of the diene based rubber.

6. The rubber composition according to any one of claims 1 to 5, wherein:
   a nitrogen adsorption BET specific surface area of the wet silica is more than 200 m$^2$/g.

7. The rubber composition according to any one of claims 1 to 6, wherein:
   the rubber composition is used to be arranged between a rubber member and a reinforcing member, or between reinforcing members, to adhere the same.

8. A laminated body obtainable by laminating and adhering a layer containing the rubber composition according to any one of claims 1 to 7 and a reinforcing member layer.

9. A conveyor belt comprising the laminated body according to claim 8.

FIG. 1

## INTERNATIONAL SEARCH REPORT

| | International application No. |
|---|---|
| | PCT/JP2017/008197 |

A. CLASSIFICATION OF SUBJECT MATTER

*C08L9/00*(2006.01)i, *B32B7/12*(2006.01)i, *B32B25/04*(2006.01)i, *B65G15/32* (2006.01)i, *C08K3/04*(2006.01)i, *C08K3/26*(2006.01)i, *C08K3/36*(2006.01)i, *F16G1/08*(2006.01)i

According to International Patent Classification (IPC) or to both national classification and IPC

B. FIELDS SEARCHED

Minimum documentation searched (classification system followed by classification symbols)

C08L9/00, B32B7/12, B32B25/04, B65G15/32, C08K3/04, C08K3/26, C08K3/36, F16G1/08

Documentation searched other than minimum documentation to the extent that such documents are included in the fields searched

Jitsuyo Shinan Koho           1922–1996     Jitsuyo Shinan Toroku Koho   1996–2017
Kokai Jitsuyo Shinan Koho   1971–2017     Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2014-152002 A   (The Yokohama Rubber Co., Ltd.), 25 August 2014 (25.08.2014), claims 1, 5, 6; paragraphs [0010], [0022], [0024] to [0027], [0038] (Family: none) | 1-9 |
| Y | JP 2009-40815 A   (The Yokohama Rubber Co., Ltd.), 26 February 2009 (26.02.2009), claims 1, 5, 6; paragraphs [0005], [0015], [0020], [0022] (Family: none) | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 April 2017 (03.04.17) | 11 April 2017 (11.04.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2017/008197

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2015/163168 A1  (The Yokohama Rubber Co., Ltd.), 29 October 2015 (29.10.2015), claims 1, 2, 5, 6; paragraphs [0053], [0058] & US 2017/0043954 A1 claims 1, 2, 5, 6; paragraphs [0073], [0080] & DE 112015001986 T5    & CN 106459498 A | 1-9 |
| A | JP 2014-205402 A  (The Yokohama Rubber Co., Ltd.), 30 October 2014 (30.10.2014), paragraph [0042] & WO 2014/168232 A1 | 1-9 |
| A | JP 2009-292960 A  (The Yokohama Rubber Co., Ltd.), 17 December 2009 (17.12.2009), claims 1, 5, 6 (Family: none) | 1-9 |
| A | JP 2009-115199 A  (Bando Chemical Industries, Ltd.), 28 May 2009 (28.05.2009), claims 1, 5 (Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H06306211 A


**Non-patent literature cited in the description**

• Nanomaterial Information Provision Sheet: Amorphous Colloidal Silica (as of March, 2011) Reference 6. METI